# EUROPÄISCHE PATENTSCHRIFT

(11) **EP 4 045 271 B1**
(45) Veröffentlichungstag und Bekanntmachung des Hinweises auf die Patenterteilung: **03.04.2024**
(21) Anmeldenummer: 20792959.7
(22) Anmeldetag: 14.10.2020
(51) Int. Cl.: B26D 3/00, B29C 48/00

(54) **VERBINDUNGS-, TRENNEINHEIT FÜR FOLIENBAHNEN**
JOINING/PARTING UNIT FOR FILM WEBS
UNITÉ D'ASSEMBLAGE/SÉPARATION POUR BANDES DE FILM

(30) Priorität: 15.10.2019 DE 102019215837
(43) Veröffentlichungstag der Anmeldung: 24.08.2022
(73) Patentinhaber: Windmöller & Hölscher KG, 49525 Lengerich (DE)
(72) Erfinder: SCHRÖDER, Christian, 49525 Lengerich (DE)
(86) Internationale Anmeldenummer: PCT/EP2020/078823
(87) Internationale Veröffentlichungsnummer: WO 2021/074177

(56) Entgegenhaltungen:
- DE-A1- 2 128 534
- DE-A1- 10 243 958
- US-A- 2 757 495
- US-A- 3 068 730

## Beschreibung

Die Erfindung betrifft eine Vorrichtung und ein Verfahren zum Trennen einer doppellagigen Folienbahn in zwei einlagige Folienbahnen und zum Starten des Aufwickelns einer der einlagigen Folienbahnen.

Blasfolienanlagen, mit denen eine doppellagige Folienbahn herstellbar ist, werden seit vielen Jahren eingesetzt. Häufig ist in einer solchen Blasfolienanlage ein Düsenkopf vorgesehen, welcher einen Düsenspalt aufweist, der insbesondere kreisrund ausgebildet ist. Aus diesem Düsenkopf wird eine Kunststoffschmelze ausgepresst beziehungsweise extrudiert, so dass ein Folienschlauch entsteht. Eine der in Transportrichtung des Folienschlauches nachfolgenden Einrichtungen ist eine Flachlegeeinrichtung und/oder Abquetscheinrichtung, mit welcher der Folienschlauch flachlegbar ist, so dass aus dem kreisrunden Folienschlauch die doppellagige Folienbahn entsteht, wobei die beiden Lagen entlang ihrer Längskanten miteinander verbunden sind.

Oft ist es gewünscht, die doppellagige Folienbahn aufzutrennen und als jeweils eine einzelne Lage jeweils einer Wickelstelle innerhalb einer Wickelstation oder innerhalb von zwei Wicklern zuzuführen und dort aufzuwickeln. Bei Produktionsstart, also im Anfahrprozess, muss die Aufteilung der doppellagigen Folienbahn auf zwei Wickelstellen händisch erfolgen. Dabei wird zunächst der flachgelegte Folienschlauch einer einzigen, ersten Wickelstelle zugeführt und dort aufgewickelt. Sobald die gewünschte Folienqualität und Breite erreicht ist, wird der flachgelegte Schlauch durch Seitenschlitzmesser in zwei einlagige

Folienbahnen, so genannte Flachbahnen, getrennt. Im Anschluss muss der Bediener die beiden noch aufeinander liegenden Flachbahnen manuell trennen, indem er versucht die eine Flachbahn von der anderen abzuheben und seine Hand zwischen die beiden Bahnen zu bringen. Sobald dem Bediener dieses gelungen ist, trennt er die Bahn mit einem Messer (Cuttermesser oder ähnlich) und vereinzelt somit die Bahnen. Den hierdurch erzeugten Flachbahnanfang verknotet er jetzt manuell mit der in die zweite Wickelstelle eingezogene Folie oder alternativ mit einem Anfahrband. Nachdem die Verknotung erfolgt ist, muss der Bediener die zweite Wickelstelle starten. Während der Zeit nach dem Trennen der Bahn und des Anknotens produziert die Blasfolienanlage mit einer reduzierten Bahngeschwindigkeit, um das manuelle Trennen und Anknoten sowie dadurch entstehende Lose (Materialbahnüberschuss) nicht zu groß werden zu lassen. Eine zu große Lose kann zu einer Verwirrung/Verknotung der Folienbahn führen, welche wiederum für den Bediener aufgrund von Einzugsgefahr gefährlich sein kann. Zudem besteht beim Anknoten die Gefahr, dass der Bediener Gliedmaßen (Finger/Hand) versehentlich einknotet und somit bei zu früher Freigabe des Anfahrens der Wickelstelle eingezogen werden kann.

Erst nachdem die zweite Wickelstelle mit der Folienbahn versorgt ist, kann die Blasfolienanlage auf gewünschte Bahngeschwindigkeit gebracht werden, und somit können Produktionsbedingungen erzeugt werden.

Im Falle eines Flachbahnverlustes an einer Wickelstelle muss die Produktionsgeschwindigkeit zunächst reduziert werden, damit ein erneutes manuelles Trennen und Anknoten erfolgen kann.

Insgesamt ist der Vorgang nicht nur zeitraubend, sondern es bestehen für den Bediener die beschriebenen und durch den Umgang mit einem Messer hervorgerufenen Unfallgefahren.

Die DE 21 28 534 A1 beschreibt eine Vorrichtung, die zum Einführen von Seitenschlitzmessern vorgesehen ist. Hierbei werden die beiden Lagen der doppellagigen Folienbahn durch zwei mit klebrigen Mantelflächen voneinander getrennt, so dass zwischen diese beiden Lagen ein Seitenschlitzmesser eingeführt werden kann. Nachteilig ist dabei, dass die klebrigen Mantelflächen einem Verschleiß unterliegen und daher nicht immer zuverlässig ihren Zweck erfüllen.

Die DE 102 43 958 A1 zeigt Schneidvorrichtungen, mit welchem die Seitenkanten der noch nicht vollständig aufeinander liegenden Lagen des Folienschlauches aufschneidet, bevor dieser die Abquetscheinrichtung erreicht hat. Nachteilig ist dabei, dass eine Vorabquetschung notwendig ist und die verschleißbehafteten Schneidmesser an einer schlecht erreichbaren Stelle innerhalb der Blasfolienanlage gewechselt werden müssen.

Die Aufgabe der vorliegenden Erfindung ist es daher, eine Vorrichtung und ein Verfahren vorzuschlagen, mit welchen die Unfallgefahren für den Bediener reduziert werden und mit welchen die weiteren genannten Nachteile vermeidbar sind.

Die Aufgabe wird gelöst durch die Merkmale des Anspruchs 1.

Demnach ist eine Vorrichtung zum Auftrennen einer doppellagigen Folienbahn vorgesehen, welche Folienbahn zunächst auf einer Wickelstelle aufwickelbar ist, wobei die beiden Lagen der Folienbahn zunächst über zwei Seitenränder miteinander verbunden sind, wobei die Vorrichtung die folgenden Merkmale umfasst:
zwei Längsschneideinheiten, mit welchen in eine erste der beiden Lagen der doppellagigen Folienbahn Längsschnitte vorgesehen sind, welche von Seitenrändern beabstandet sind, so dass die eine Lage eine geringere Breite aufweist als die doppellagige Folienbahn,
zumindest ein Drückelement, welches in orthogonaler Richtung der Ebene, welche durch die doppellagige Folienbahn aufgespannt ist, bewegbar ist, wobei die beiden Lagen der doppellagigen Folienbahn voneinander beabstandbar sind, wobei das Drückelement nur mit einem Bereich der Folienbahn in Kontakt steht, der zwischen der Seitenkante und nächsten benachbarten Längsschnitt liegt, und welches in der Ebene der doppellagigen Folienbahn, aber senkrecht zu ihrer Längsrichtung bewegbar ist, so dass das Drückelement zwischen die beiden Lagen der doppellagigen Folienbahn führbar ist.

Diese Erfindung bietet den Vorteil, dass insbesondere durch die beiden Längsschnitte zunächst eine schmale erste Lage entsteht und die zweite Lage sozusagen um die Seitenkanten herum reicht. Mit dem Drückelement kann nun die zweite Lage zurückgedrückt und von der ersten Lage getrennt werden. Bevorzugt reicht die Trennung so weit, dass das Drückelement nun auch in der Ebene der Folienbahn, aber senkrecht zu ihrer Längsrichtung verschiebbar ist, so dass das Drückelement, welches vorteilhafterweise als Rolle oder Walze ausgestaltet ist, zwischen die beiden Lagen schiebbar ist. Dadurch können die beiden Lagen nicht wieder zusammenfallen. Damit kann der Bediener nun mit einem Messer einen Längsschnitt durchführen, ohne dass er zuvor händisch die Bahnen trennen muss, was die Unfallgefahr bereits reduziert.

Vorteilhaft ist es jedoch, dass eine Trenneinrichtung vorgesehen ist, mit welcher die erste Lage der doppellagigen Folienbahn trennbar ist, so dass ein neuer Bahnanfang entsteht. In diesem Fall ist es nicht mehr notwendig, dass der Bediener mit einem Messer tätig wird, um die erste Lage zu durchtrennen. Somit wird die Unfallgefahr weiter reduziert. Dem Bediener bleibt in diesem Fall nur noch, den neuen Bahnanfang mit dem Einführband zu verbinden.

In einer weiteren vorteilhaften Ausgestaltung der Erfindung ist eine Halteeinrichtung vorgesehen, mit welcher ein Einführband haltbar und an die erste Lage heranführbar ist. Somit kann auch der Bediener hiervon entlastest werden, denn es ist zu bedenken, dass eine laufende Bahn stets eine Unfall- und Verletzungsgefahr darstellt. Der Bediener muss lediglich dafür Sorge tragen, dass das Einführband in die Halteeinrichtung eingelegt wird. Dieses kann bereits vor dem Start der gesamten Blasfolienanlage erfolgen und/oder mit einem Abstand zu laufenden Bahn, was keine Gesundheitsgefahr für den Bediener darstellt. Als Einführband wird jegliches Mittel verstanden, welches in der Lage ist, den mit ihm verbundenen Bahnanfang in den Wickler einzuziehen, also insbesondere eine Folie (beispielsweise aus einem vorherigen Auftrag) oder das oben beschriebene Anfahrband.

In einer weiteren, vorteilhaften Ausführungsform ist eine Verbindungseinrichtung vorgesehen, mit welcher der neue Bahnanfang und das Einführband miteinander verbindbar sind. Damit wird dem Bediener auch das Zusammenknoten des Einführbandes und des Bahnanfangs erspart, so dass dieser beim Anwickeln der ersten Lage auf eine weitere Wickelstelle nicht mehr manuell tätig werden muss. Die Verbindungseinrichtung kann dabei beispielsweise mit einem Stempel ausgestattet sein, mit welchem der Bahnanfang gegen das Einführband, was vorzugsweise mit einem doppelseitigen Klebeband versehen ist, drückbar ist.

Anschließend ist es nur noch notwendig, den neuen Bahnanfang auf einen in der Wickelstelle befindlichen Wickel aufzuwickeln.

Die erfindungsgemäße Vorrichtung ist vorzugsweise Bestandteil einer eingangs beschriebenen Blasfolienanlage. Bevorzugt umfasst diese die Längsschneideinheit. Diese kann im Bereich der Flachlegeeinrichtung angeordnet sein und insbesondere an dieser beweglich befestigt sein, so dass bereits bevor der Folienschlauch endgültig in eine doppellagigen Folienbahn überführt wurde, ein Längsschnitt einbringbar ist. In diesem Fall kann es vermieden werden, dass die zweite Lage der doppellagigen Folienbahn ebenfalls ungewollt mit Schnitten versehen wird. In der Flachlegeeinrichtung kann auch eine zweite Längsschneideeinheit vorgesehen sein.

Es ist jedoch auch denkbar, einen ersten Längsschnitt dazu zu verwenden, weitere im Transportweg der doppellagigen Folienbahn angeordnete Längsschneideeinheiten in Eingriff mit der Folienbahn zu bringen. Dazu können weitere Drückelemente vorgesehen sein, mit welchen ebenfalls ein Abstand zwischen der ersten und der zweiten Lage der doppellagigen Folienbahn erzeugbar ist, welcher dazu nutzbar ist, Längsschneideinheiten, insbesondere in Form von Seitenkantenschlitzmessern einzubringen.

Die oben beschriebene Aufgabe wird zusätzlich gelöst durch ein Verfahren zum Auftrennen einer doppellagigen Folienbahn, welche zunächst auf einer Wickelstelle aufgewickelt wird, wobei die beiden Lagen der Folienbahn zunächst über zwei Seitenränder miteinander verbunden sind, wobei das Verfahren die folgenden Merkmale umfasst:
- Einfügen zweier Längsschnitte in eine erste der beiden Lagen der doppellagigen Folienbahn mit zwei Längsschneideinheiten, wobei die Längsschnitte von Seitenrändern beabstandet sind, so dass die eine Lage eine geringere Breite aufweist als die doppellagige Folienbahn,
- Voneinander-Trennen der beiden Lagen der doppellagigen Folienbahn mit zumindest einem Drückelement, welches in orthogonaler Richtung der Ebene, welche durch die doppellagige Folienbahn aufgespannt ist, bewegt wird,
- Führen des Drückelements zwischen die beiden Lagen der doppellagigen Folienbahn, wobei das Drückelement in der Ebene der doppellagigen Folienbahn aber senkrecht zu ihrer Längsrichtung bewegt wird.

Damit werden die gleichen Vorteile erzielt, die bereits im Zusammenhang mit einer erfindungsgemäßen Vorrichtung erzielt wurden.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Vorrichtung und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Eine doppellagige Folienbahn mit zwei Längsschnitten
- Fig. 2: Die doppellagige Folienbahn mit Drückelement
- Fig. 3: Die doppellagige Folienbahn vor einem Verschieben des Drückelements
- Fig. 4: Die doppellagige Folienbahn mit dem sich zwischen den Lagen befindenden Drückelement.
- Fig. 5: Die Situation gemäß Figur 4 mit einem zusätzlich dargestellten Halteelement
- Fig. 6: Die doppellagige Folienbahn, nun zusätzlich mit einer Verbindungseinrichtung und einer Trenneinrichtung.

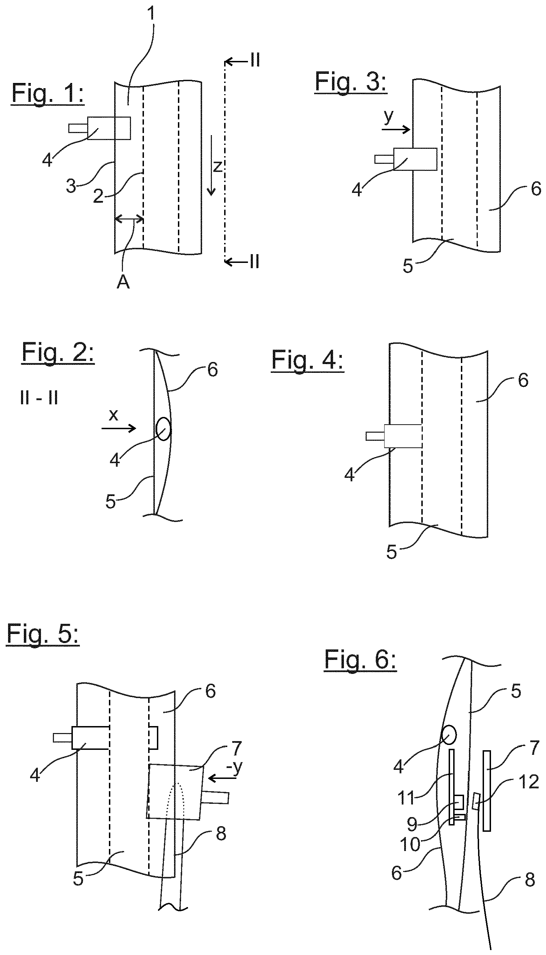

Fig. 1 zeigt eine doppellagige Folienbahn 1 mit zwei Längsschnitten 2, die mit unterbrochenen Linien dargestellt sind. Die Folienbahn läuft in Transportrichtung z. Zu erkennen ist, dass die Längsschnitte 2 mit einem Abstand A von der Seitenkante 3 beabstandet sind. Der Abstand A zur nächstliegenden Seitenkante 3 kann für jeden Längsschnitt auch unterschiedlich sein, was die Funktionsfähigkeit der Erfindung nicht einschränkt. Weiterhin ist ein Drückelement 4 gezeigt. Insbesondere können zwei in Transportrichtung z beabstandete Drückelemente vorgesehen sein. Ein Drückelement 4 kann als Rolle ausgebildet sein, so dass diese auf der Folienbahn 1 abrollt, während sie mit dieser in Kontakt steht.

Die Figur 2 zeigt nun, dass das Drückelement in Richtung x (orthogonal zur Ebene, die durch die Folie definiert wird) bewegt wurde, wobei das Drückelement nur mit einem Bereich der Folienbahn 1 in Kontakt steht, der zwischen der Seitenkante 3 und nächsten benachbarten Längsschnitt 2 liegt. Damit ist es möglich, die erste Lage 5 der Folienbahn 1 und die zweite Lage 6 der Folienbahn in Richtung x zu trennen.

Die Figur 3 deutet nun an, dass zusätzlich das Drückelement in Richtung y, also orthogonal zu den Richtungen x und z bewegbar ist, während die die Lagen 5 und 6 beabstandet hält. Das Ergebnis ist in der Figur 4 gezeigt. In dieser Ansicht liegt das Drückelement unterhalb der Lage 5, aber oberhalb der Lage 6.

In der Figur 5 ist nun eine Halteeinrichtung 7 zu erkennen, an der auf der der Folienbahn zugewandten Seite ein Einführband 8 gehalten wird. Die Halteeinrichtung kann nun in Richtung -y verlagert werden, so dass das Einführband oberhalb der ersten Lage 5 liegt. Dies ist in der Figur 6 zu erkennen. Weiterhin sind in der Figur 6 eine Verbindungseinheit 9 und eine Trenneinheit 10 zu erkennen. Diese können gemeinsam auf einem Träger 11 angeordnet sein, welcher zwischen den beiden Lagen 5 und 6 positionierbar sein kann. Mit der Verbindungseinheit kann nun die Lage 5 an das Einführband 8 gedrückt und verbunden werden. Beispielsweise kann das Einführband bereits mit einem doppelseitigen Klebeband 12 präpariert sein. Die Trenneinheit 10 kann nun die Lage 5 unterhalb der Verbindungsstelle trennen, was insbesondere zeitgleich mit dem Andrücken der Lage 5 an das Einführband 8 erfolgen kann. Nun kann die zweite Wickelstelle gestartet werden, so dass das Einführband die Lage 5 in Richtung auf diese Wickelstelle zieht, so dass die erste Lage dort aufgewickelt werden kann, was allerdings nicht dargestellt ist.

| Bezugszeichenliste | |
|---|---|
| 1 | Doppellagige Folienbahn |
| 2 | Längsschnitt |
| 3 | Seitenkante |
| 4 | Drückelement |
| 5 | Erste Lage |
| 6 | Zweite Lage |
| 7 | Halteeinrichtung |
| 8 | Einführband |
| 9 | Verbindungseinheit |
| 10 | Trenneinheit |
| 11 | Träger |
| 12 | Doppelseitiges Klebeband |
| 13 | |
| 14 | |
| 15 | |

## Patentansprüche

1. Vorrichtung zum Auftrennen einer doppellagigen Folienbahn (1), welche zunächst auf einer Wickelstelle aufwickelbar ist, wobei die beiden Lagen (5, 6) der Folienbahn (1) zunächst über zwei Seitenränder (3) miteinander verbunden sind, wobei die Vorrichtung die folgenden Merkmale umfasst:
• wenigstens zwei Längsschneideinheiten, mit welcher in eine erste der beiden Lagen (5, 6) der doppellagigen Folienbahn (1) zwei Längsschnitte (2) einbringbar sind, welche von Seitenrändern (3) beabstandet sind, so dass die eine Lage (5) eine geringere Breite aufweist als die doppellagige Folienbahn (1),
• zumindest ein Drückelement (4), welches in orthogonaler Richtung (x) der Ebene, welche durch die doppellagige Folienbahn (1) aufgespannt ist, bewegbar ist, wobei die beiden Lagen (5, 6) der doppellagigen Folienbahn (1) voneinander beabstandbar sind, wobei das Drückelement (4) nur mit einem Bereich der Folienbahn (1) in Kontakt steht, der zwischen der Seitenkante (3) und nächsten benachbarten Längsschnitt (2) liegt, und welches in der Ebene (y) der doppellagigen Folienbahn (1), aber senkrecht zu ihrer Längsrichtung (z) bewegbar ist, so dass das Drückelement (4) zwischen die beiden Lagen (5, 6) der doppellagigen Folienbahn (1) führbar ist,.

2. Vorrichtung nach Anspruch 1,
**dadurch gekennzeichnet, dass**
eine Trenneinrichtung (10) vorgesehen ist, mit welcher die erste Lage (5) der doppellagigen Folienbahn (1) trennbar ist, so dass ein neuer Bahnanfang entsteht.

3. Vorrichtung nach einem der vorstehenden Ansprüche,
**dadurch gekennzeichnet, dass**
eine Halteeinrichtung (7) vorgesehen ist, mit welcher ein Einführband (8) haltbar und an die erste Lage (5) heranführbar ist.

4. Vorrichtung nach einem der vorstehenden Ansprüche,
**dadurch gekennzeichnet, dass**
eine Verbindungseinrichtung (9) vorgesehen ist, mit welcher der neue Bahnanfang und das Einführband (8) miteinander verbindbar sind,

5. Verfahren zum Auftrennen einer doppellagigen Folienbahn (1), welche zunächst auf einer Wickelstelle aufgewickelt wird, wobei die beiden Lagen (5, 6) der Folienbahn (1) zunächst über zwei Seitenränder (3) miteinander verbunden sind, wobei das Verfahren die folgenden Merkmale umfasst:
• Einfügen zweier Längsschnitte in eine erste der beiden Lagen (5, 6) der doppellagigen Folienbahn (1) mit zwei Längsschneideinheiten, wobei die Längsschnitte von Seitenrändern (3) beabstandet sind, so dass die eine Lage (5) eine geringere Breite aufweist als die doppellagige Folienbahn (1),
• Trennen der beiden Lagen (5, 6) der doppellagigen Folienbahn (1) voneinander mit zumindest einem Drückelement (4), welches in orthogonaler Richtung (x) der Ebene (z, y), welche durch die doppellagige Folienbahn (1) aufgespannt ist, bewegt wird,
Führen des Drückelements (4) zwischen die beiden Lagen (5, 6) der doppellagigen Folienbahn (6), wobei das Drückelement (4) in der Ebene der doppellagigen Folienbahn (1), aber senkrecht zu ihrer Längsrichtung (z) bewegt wird.

## Claims

1. An apparatus for separating a two-ply film web (1), which can first be wound up at a winding station, wherein the two plies (5, 6) of the film web (1) are first connected to one another via two side edges (3), wherein the apparatus comprises the following features:
• At least two longitudinal slitting units, with which two longitudinal slits (2) can be made into a first of the two plies (5, 6) of the two-ply film web (1), which are at a distance from side edges (3), so that one ply (5) has a narrower width than the two-ply film web (1),
• at least one pressing element (4), which can be moved in the orthogonal direction (x) of the plane generated by the two-ply film web (1), wherein the two plies (5, 6) of the two-ply film web (1) are able to be distanced from one another, wherein the pressing element (4) is only in contact with a region of the film web (1), which lies between the side edge (3) and the next adjacent longitudinal slit (2), and which can be moved in the plane (y) of the two-ply film web (1), but perpendicular to its longitudinal direction (z), so that the pressing element (4) can be guided between the two plies (5, 6) of the two-ply film web (1).

2. The apparatus according to claim 1,
**characterized in that**
a separating device (10) is provided, with which the first ply (5) of the two-ply film web (1) can be separated, so that a new start of the web is created.

3. The apparatus according to any one of the preceding claims,
**characterized in that**
a holding device (7) is provided, with which an insertion tape (8) can be held and guided to the first ply (5).

4. The apparatus according to any one of the preceding claims,
**characterized in that**
a connecting device (9) is provided, with which the new start of the web and the insertion tape (8) can be connected to one another.

5. A method for separating a two-ply film web (1), which can first be wound up at a winding station, wherein the two plies (5, 6) of the film web (1) are first connected to one another via two side edges (3), wherein the method comprises the following features:
• Joining two longitudinal slits into a first of the two plies (5, 6) of the two-ply film web (1) with two longitudinal slitting units, wherein the longitudinal slits are at a distance from side edges (3), so that the one ply (5) has a narrower width than the two-ply film web (1),
• separating the two plies (5, 6) of the two-ply film web (1) from each other with at least one pressing element (4), which is moved in the orthogonal direction (x) of the plane (z, y) generated by the two-ply film web (1),
• guiding the pressing element (4) between the two plies (5, 6) of the two-ply film web (6), wherein the pressing element (4) is moved in the plane of the two-ply film web (1), but perpendicular to its longitudinal direction (z).

## Revendications

1. Dispositif pour la découpe d'une bande de film à double couche (1), qui peut être d'abord enroulée sur un point d'enroulement, dans lequel les deux couches (5, 6) de la bande de film (1) sont d'abord reliées entre elles par l'intermédiaire de deux bords latéraux (3), dans lequel le dispositif présente les caractéristiques suivantes :
• au moins deux unités de coupe longitudinale avec lesquelles, dans une première des deux couches (5, 6) de la bande de film à double couche (1), deux coupes longitudinales (2) peuvent être réalisées, qui sont distantes des bords latéraux (3), de sorte qu'une couche (5) présente une largeur plus faible que la bande de film à double couche (1),
• au moins un élément de pression (4), qui peut être déplacé dans la direction orthogonale (x) du plan qui est défini par la bande de film à double couche (1), dans laquelle les deux couches (5, 6) de la bande de film à double couche (1) peuvent être disposées de manière distante l'une de l'autre, dans lequel l'élément de pression (4) est en contact uniquement avec une zone de la bande de film (1), qui se trouve entre le bord latéral (3) et la coupe longitudinale (2) adjacente suivante, et qui peut être déplacée dans le plan (y) de la bande de film à double couche (1), mais perpendiculairement à sa direction longitudinale (z), de sorte que l'élément de pression (4) peut être guidé entre les deux couches (5, 6) de la bande de film à double couche (1).

2. Dispositif selon la revendication 1,
**caractérisé en ce que**
un dispositif de séparation (10) est prévu, avec lequel la première couche (5) de la bande de film à double couche (1) peut être séparée, de façon à obtenir un nouveau départ de bande.

3. Dispositif selon l'une des revendications précédentes,
**caractérisé en ce que**
un dispositif de maintien (7) est prévu, avec lequel une bande d'introduction (8) peut être maintenue et rapprochée de la première couche (5).

4. Dispositif selon l'une des revendications précédentes,
**caractérisé en ce que**
un dispositif de liaison (9) est prévu, avec lequel le nouveau départ de bande et la bande d'introduction (8) peuvent être reliés entre eux.

5. Procédé de découpe d'une bande de film à double couche (1), qui est d'abord enroulée sur un point d'enroulement, dans lequel les deux couches (5, 6) de la bande de film (1) sont d'abord reliées entre elles par l'intermédiaire de deux bords latéraux (3), dans lequel le procédé présente les caractéristiques suivantes :
• la réalisation de deux coupes longitudinales dans une première des deux couches (5, 6) de la bande de film à double couche (1) avec deux unités de coupe longitudinale, dans lequel les coupes longitudinales sont distantes des bords latéraux (3), de sorte qu'une couche (5) présente une largeur plus faible que la bande de film à double couche (1),
• la séparation des deux couches (5, 6) de la bande de film à double de couche (1) avec au moins un élément de pression (4), qui est déplacé dans la direction orthogonale (x) du plan (z, y) défini par la bande de film à double couche (1), guidage de l'élément de pression (4) entre les deux couches (5, 6) de la bande
de film à double couche (6), dans lequel l'élément de pression (4) est déplacé dans le plan de la bande de film à double de couche (1), mais perpendiculairement à sa direction longitudinale (z).
